# EUROPEAN PATENT APPLICATION

(11) **EP 4 186 635 A1**
(43) Date of publication of application: **31.05.2023**
(21) Application number: 22208561.5
(22) Date of filing: 21.11.2022
(51) Int. Cl.: B23P 19/00, A41H 37/02, B23P 19/04, A43D 100/02, B65G 11/02, B65G 47/88, B65G 11/20, B65G 43/08

(54) **FEEDING MACHINE FOR WASHERS FOR THE PLACEMENT OF EYELETS**

(30) Priority: 24.11.2021 ES 202132331 U
(71) Applicant: Fruto De Las Ideas, S.L., 03801 Alcoy (Alicante) (ES)
(72) Inventor: MAIQUES MORAL, Abacuc, 03801 Alcoy (Alicante) (ES)
(74) Representative: Ungria López, Javier

(57) **Abstract**

The invention relates to a feeding machine (1) for washers (3) allowing a correct placement of eyelets (4) in laminar bodies, such as textile elements, wherein said feeding machine (1) comprises a ramp (5) for moving the washers (3) from a higher height to a lower height, a plurality of detectors (6) for detecting a washer (3) which are arranged in different segments of a length of the ramp (5), configured to detect the presence of each washer (3); and a plurality of linear actuators (7) arranged along the length of the ramp (5), said actuators (7) being connected to stops (8) which are configured to block the passage of the washers (3) along the ramp (5). The feeding machine (1) also comprises a control electronics connected to the linear actuators (7) and to the detectors (6) for detecting a washer (3), said control electronics being configured to control the feeding of the washers (3) along the ramp (5).

## Description

### FIELD AND OBJECT OF THE INVENTION

The invention consists of a machine that allows the feeding of washers at a work station configured for the placement and fixing of eyelets in laminar bodies, preferably flexible laminar bodies, such as canvases, curtains, boat sails, as well as any fabric material that requires said eyelets in order to be connected to other elements.

The field of application of the present invention is framed within the industrial sector of the manufacture and installation of fastening supports for flexible laminar elements, and more specifically, in the placement and fixing of eyelets.

### BACKGROUND OF THE INVENTION

Nowadays, in the laminar component manufacturing industry, a wide variety of machines and components configured to allow the placement and fixing of eyelets in said laminar components are known.

This is due to the fact that this eyelet placement method is very common in the industry, since said bodies allow, by means of being fixed to laminar components, to connect said components to other structural elements, such as flexible elements like ropes or cables, or rigid elements, like bars, with these elements being inserted through the holes of each eyelet.

Among the machines configured for the placement and fixing of eyelets in laminar bodies, also known as eyelet machines, manual machines, which lack drive elements and require an operator to perform all the actions of positioning the laminar components, washers and eyelets, as well as the fixing of said bodies, by tightening, through the movement of a lever or bar, stand out. Also available on the market are semi-automatic machines, where the fixing is done by an automatic linear actuator but the placement of the eyelets and washers is manual; automatic machines, where both the placement of the washers and the eyelets, as well as the fixing between them, is automatic; and fully automated systems.

One of the most common problems with automatic machines is correctly feeding the bodies, washers and eyelets to be connected to the laminar components, with each of said bodies being in a correct position configured for this purpose, and on the opposite side of said laminar components.

### DESCRIPTION OF THE INVENTION

Setting an eyelet in a laminar piece with automatic machines requires a washer to be located on the laminar body, but located on the side opposite the one where the eyelet is located, with both elements being concentrically located, so that an additional machine allows the fixing thereof by tightening.

In order to provide a new way to avoid the drawbacks of the automatic machines mentioned in the previous section, a machine is described below that allows a staggered feeding of washers for the placement of eyelets in laminar bodies.

The machine of the invention comprises a ramp configured to move the washers from an upper height to a lower height, the washers being moved, at the lower height, in an orientation for the placement of eyelets.

The machine also comprises a plurality of detectors for detecting a washer which are arranged in different segments of a length of the ramp, said detectors being configured to detect the presence of each washer moving along said segments; and a plurality of linear actuators arranged along the length of the ramp, said actuators being connected to stops which are configured to retain or block the passage of the washers along the ramp by means of the actuation of the linear actuators.

Similarly, the feeding machine comprises control electronics connected to the linear actuators and detectors for detecting a washer, said control electronics being configured to control the feeding of the washers along the ramp.

The aforementioned orientation of washers, for the placement of eyelets, is that orientation which allows the washers to be located on a laminar component, the eyelets being placed on the opposite side of said component, with an orientation similar to that of the washers.

The mentioned detectors can be piezoelectric or photoelectric sensors, which allow to check the position and/or movement of the washers by means of a light beam or barrier oriented towards the path of the washers on the ramp.

The described novel system of stops connected to linear actuators, which in turn are controlled by control electronics connected to the detectors, allow the washers to be retained on the ramp and dropped synchronously with the placement of the eyelets, which can be controlled by another machine.

In one embodiment, each detector for detecting a washer is associated with and connected to a linear actuator of the ramp. Therefore, if a detector detects the presence or slippage of a washer on a segment of the ramp, depending on the configuration of the control electronics, the corresponding linear actuator can be activated so that the stop to which said actuator is connected retains said washer at a specific point. Similarly, the detector can also be used to check whether the release of the stop of a linear actuator allows the passage of washers.

In one embodiment, the feeding machine for washers is configured to be connected, by means of a conveyor belt, to a hopper vibrator that positions the washers in position for eyelet placement, and moves them to the upper height of the ramp of the feeding machine for washers. That is, the hopper vibrator transfers the washers, one row at a time, to the feed machine, the washers being in a suitable orientation to be moved down the ramp. This hopper vibrator thereby makes it possible to discriminate in advance the wrongly positioned washers as well as the possible overlapping between washers.

The joint system of the hopper vibrator with the feeding machine allows to ensure that the correct number of washers is available and well positioned, so that the operating speed is far superior to that of known machines.

In one embodiment, the ramp comprises an elongated cavity through which the washers move by sliding, wherein said cavity preferably allows a maximum of three washers in a row to be housed throughout its interior. This cavity preferably has a rectangular section with an inlet through which the washers are introduced, located at an upper end part, and an outlet located at a lower end part. The width of this cavity is approximately slightly larger than the diameter of a washer to allow the washer to slide effortlessly with sufficient clearance to do so, but without off-centering.

In one embodiment, the linear actuators are electric or pneumatic actuators. These actuators can receive signals from the control electronics to which they are connected to move the stops in the path of the washers in order to retain them at different parts of the ramp.

Since preferably only three washers fit in the cavity of the ramp at the same time, the machine also preferably comprises three linear actuators and three detectors for detecting a washer in different segments of the ramp.

In one embodiment, the ramp comprises a first straight section located in an upper part of the ramp, comprising an inclination with respect to the horizontal, and a second curved section, located in a lower part of the ramp, connected to the first straight section, configured to release the washers in a horizontal position. The horizontal position is the preferred position for the placement of the eyelets, since gravity favors the movement of the washers until they are placed in said position.

The inclination of the first part of the ramp has to be the necessary and sufficient inclination for the washers to slide down it, due to the effect of gravity, to the exit of the ramp located in the second section, with sufficient energy to be placed in the suitable position to fix the eyelet in the laminar body.

Another part of the invention consists of a work station comprising:
- a feeding machine for washers as defined in any of the preceding embodiments;
- a supply machine for eyelets;
- a linear drive machine, preferably comprising a hydraulic actuator, wherein said linear drive machine is configured to perform the operation of connecting a washer to an eyelet in a laminar body; and
- an electronic management system connected to the linear drive machine, to the control electronics of the feeding machine for washers and to the supply machine for eyelets.

With this work station, the eyelets can be placed in laminar bodies automatically, i.e., with automatic feeding of both washers and eyelets.

In a preferred embodiment, the work station comprises a hopper vibrator connected to a feeding machine for washers by means of a conveyor belt. The operation of said hopper consists of introducing the washers inside it, so that by means of a vibrating and selection system, only the correctly oriented washers are moved by the conveyor belt to the feeding machine, while those that are rotated are pushed back to the bottom of the hopper.

In one embodiment, the work station comprises a support structure configured to support the feeding machine for washers. This support structure can be one or more rigid metal plates, or a frame based on bars that allow the feeding machine to be fixed to a workbench or table.

In one embodiment, the work station comprises an electronic touch screen connected to the electronic management system of the work station. This screen allows the user to interact with the entire work station, allowing different configurations or work modes depending on design requirements or needs.

In one embodiment, the work station comprises a pedal for activation of the linear drive machine. Since the placement of the laminar body in which the eyelets are to be placed may require gripping by the operator, a pedal can be provided so that hands are not required to activate the linear drive machine at the work station.

By means of the described arrangement of the feeding machine and work station, as well as the corresponding electronic management system, it is possible to achieve different work modes which can be selected by the electronic touch screen:
- Normal work mode: in which the cycle starts with an eyelet and a washer in position on the laminar body, once they have been supplied by the supply and feeding machine, respectively, so that the sequence when pressing the pedal of the linear drive machine of the work station, is as follows:
   ▪ The eyelet with the washer is placed and fixed in the laminar body by activating the linear drive machine, tightening both parts together and fixing them by tightening and deforming the parts.
   ▪ At the end, a second washer and a second eyelet are supplied to carry out a new placement.
- Cutting work mode: wherein neither eyelets nor washers are fed by the supply and feeding machines, retaining said parts by means of the stops of said machines, activating the linear drive machine without there being an eyelet or washer on the laminar body. When the pedal is pressed:
   ▪ The linear drive machine performs its movement. Since there is no eyelet or washer, a cut is made in the laminar body with a shape similar to that of the body that pushes the eyelet and washer.
      This mode is useful for adjusting a placement nozzle.
   ▪ At the end, neither washer nor eyelet is supplied.
- Pre-cutting: the cycle starts without an eyelet or washer as they have not been supplied by the corresponding machines. The following occurs when the pedal is pressed:
   ▪ The linear drive machine performs its movement. Since there is no eyelet or washer, a cut is made in the laminar body.
   ▪ At the end, a washer and an eyelet are supplied by the corresponding machines.
   ▪ A second linear drive movement is performed. This time, the eyelet and washer are placed in the material by the corresponding machines.
   ▪ At the end, neither washer nor eyelet is supplied.

Since the washers and eyelets are preferably placed in the horizontal position by the supply and feeding machines in order to be placed and fixed in the laminar bodies, the linear drive machine performs a vertical movement to fix said parts.

### BRIEF DESCRIPTION OF THE FIGURES

To complete the description of the invention, and for the purpose of helping to make the features thereof more readily understandable, according to a preferred exemplary embodiment thereof, a set of drawings is included wherein, by way of illustration and not limitation, the following figures have been represented:
- Figure 1 shows a front perspective view of the feeding machine for washers in which the component parts as well as three aligned washers, located inside the longitudinal cavity of said ramp, can be seen.
- Figure 2 shows a detailed perspective of figure 1, in which a section of the upper part of the ramp can be seen, allowing the position of the stops and the detectors for detecting washers to be seen.
- Figure 3 shows a rear perspective of the feeding machine for washers in which the linear actuators and the detectors for detecting washers, as well as the support structure, can be seen.
- Figure 4 shows a detailed perspective view of Figure 2, with the arrangement of the linear actuators and the detectors for detecting washers to be seen.
- Figure 5 shows a perspective view of the work station, in which the arrangement of the feeding machine for washers, the supply machine for eyelets, the linear drive machine, and the hopper vibrator connected to the feeding machine for washers by means of a conveyor belt can be seen.
- Figure 6 shows a perspective view of the work station in which the arrangement of the eyelets in the delivery machine can be seen.

A list of the references used in the figures is provided below:
- (1): Feeding machine
- (2): Work station
- (3): Washers
- (4): Eyelets
- (5): Ramp
(51) Cavity
(52) First section
(53) Second section
- (6): Detectors
- (7): Linear actuators
- (8): Stops
- (9): Conveyor belt
- (10): Hopper vibrator
- (11): Supply machine
- (12): Linear drive machine
- (13): Hydraulic actuator
- (14): Support structure
- (15): Electronic touch screen

### DESCRIPTION OF A PREFERRED EMBODIMENT OF THE INVENTION

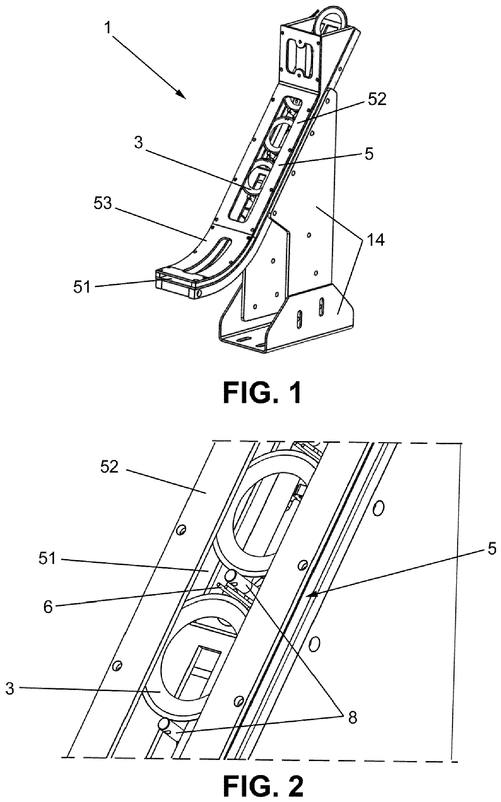

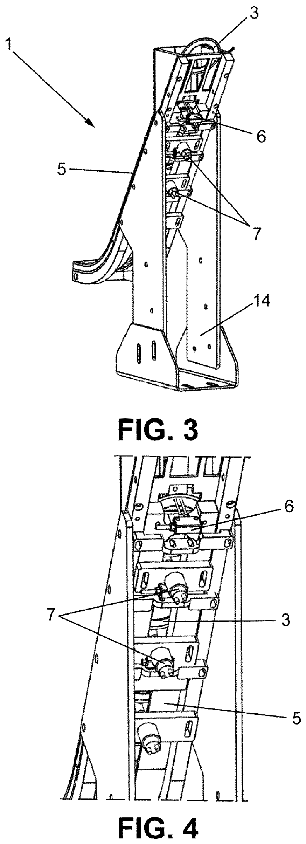

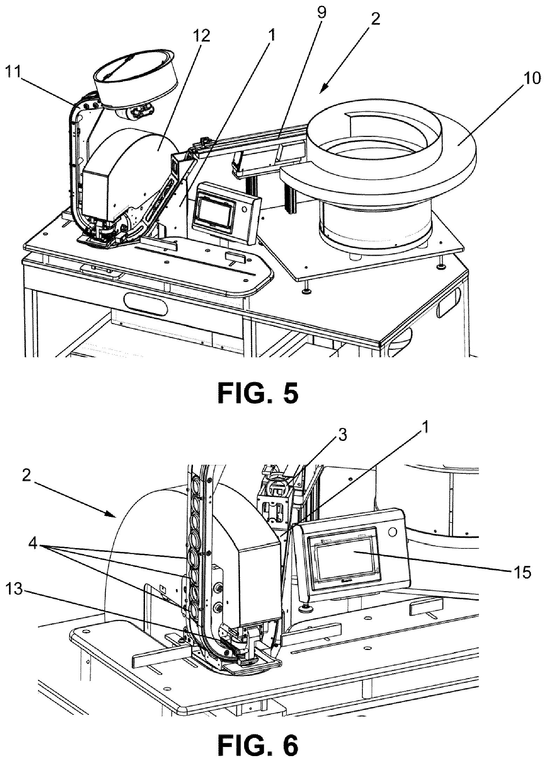

As can be seen in the figures, especially in Figures 1 and 3, the invention consists of a feeding machine (1) for washers (3) for placing eyelets (4) in laminar bodies, such as curtains, and of a work station (2) for the placement of eyelets (4), as shown in figures 5 and 6, comprising said feeding machine (1) for washers (3), which is fixed by means of a support structure (14) to a workbench or table of said station (2).

More specifically, the feeding machine (1) shown in figure 1 allows to provide washers (3) in a horizontal position on a laminar body, transferring said washers (3) from a higher to a lower height, taking advantage of the sliding fall of said washers (3) by means of gravity, in order to place them in a suitable position for the placement of an eyelet (4).

For this purpose, the feeding machine (1) comprises a ramp (5) which in turn comprises an elongated cavity (51) having a rectangular section, the washers (3) sliding inside same, a first straight section (52) comprising, at an upper end part, the inlet of the cavity (51) through which the washers (3) are introduced, and a second curved section (53) comprising, at a lower end part, the exit of the cavity (51) through which the washers (3) are ejected.

In this way, said ramp (5) comprises a shape particularly suitable for supplying washers (3) one by one, in the ideal position for the placement of eyelets (4) due to the combination of the inclination of the first straight section (52) with the curvature of the second curved section (53).

As can be seen in Figures 3 and 4, in order to allow a suitable arrangement of the washers (3) for the subsequent placement of eyelets (4), the ramp (5) also comprises a plurality of detectors (6) for detecting a washer (3) and a plurality of electric linear actuators (7), preferably three of each, arranged along the length of the ramp (5), said actuators (7) being connected to stops (8) which allow the washers (3) to be retained in different sections of the ramp (5) by means of the actuation of the linear actuators (7) to which they are connected.

In this way, since the control electronics of the feeding machine (1) for washers (3) are connected to each of the linear actuators (7) as well as to the detectors (6), they can control the supply of washers (3) of the feeding machine (1) according to the configuration provided.

To provide washers to the feeding machine (1), said machine is connected to a hopper vibrator (10) by means of a conveyor belt (9), as can be seen in Figures 5 and 6.

The operation of this set of machines (1, 10) consists of introducing the washers (3) at the bottom of the hopper (10), which, by means of vibration, transfers the washers (3) to the conveyor belt (9), in a row, so that only the washers (3) that are in the correct position to be moved by the ramp (5) of the feeding machine (1) cross said belt (9) while those that are in an incorrect position or overlap with another washer (3) are returned to the bottom of the hopper (10). Once the washers (3) have been moved by the conveyor belt (9), they are introduced into the cavity (51) through the upper end part of the first section (52) of the ramp (5), sliding through said cavity (51) until they are ejected through the lower end part of the second section (53).

Once they have been ejected in the position for the placement of eyelets (4), the eyelets can be placed and fixed by means of the machines arranged in the work station (2).

In addition to the feeding machine (1) and the hopper vibrator (10) with the conveyor belt (9), the work station (2) also comprises a supply machine (11) for eyelets (4) which can have an operation similar to the feeding machine (1), a linear drive machine (12), which preferably comprises a hydraulic actuator (13) that performs the operation of connecting the washer (3) with an eyelet (4) in a laminar body, and an electronic management system connected to the linear drive machine (12), to the control electronics of the feeding machine (1) for washers (3) and to the supply machine (11) for eyelets (4).

This electronic management system of the work station (2) is configurable and operable from an electronic touch screen (15), which allows an operator controlling said work station (2) to arrange and choose the way in which the eyelets (4) are placed according to the available configurations.

Once a configuration has been selected, the work station can be activated by means of an activation pedal for activating the linear drive machine (12), so that said linear drive machine (12) generates, by tightening, the placement of the eyelets (4) and washers (3) that the supply machines (11) and feed machines (1) provide.

## Claims

1. A feeding machine (1) for washers (3) for the placement of eyelets (4) in laminar bodies, wherein said machine (1) is **characterized in that** it comprises:
- a ramp (5) configured to move the washers (3) from an upper height to a lower height, the washers (3) being moved, located at the lower height, in an orientation for the placement of eyelets (4);
- a plurality of detectors (6) for detecting a washer (3) arranged in different segments of a length of the ramp (5), said detectors (6) being configured to detect the presence of each washer (3) moving along said segments of the ramp (5); and
- a plurality of linear actuators (7) arranged along the length of the ramp (5), said actuators (7) being connected to stops (8) which are configured to block the passage of the washers (3) along the ramp (5) by means of the actuation of the linear actuators (7);
wherein the feeding machine (1) comprises a control electronics connected to the linear actuators (7) and to the detectors (6) for detecting a washer (3), said control electronics being configured to control the feeding of the washers (3) along the ramp (5).

2. The feeding machine for washers according to the preceding claim, wherein each detector (6) for detecting a washer (3) is associated with and connected to a linear actuator (7) of the ramp (5).

3. The feeding machine (1) for washers (3) according to any of the preceding claims, wherein said machine (1) is configured to be connected, by means of a conveyor belt (9), to a hopper vibrator (10) which positions the washers (3) in the position for the placement of eyelets (4), and moves them to the upper height of the ramp (5) of the feeding machine (2) for washers (3).

4. The feeding machine (1) for washers (3) according to any of the preceding claims, wherein the ramp (5) comprises an elongated cavity (51) through which the washers (3) move by sliding, wherein said cavity (51) allows a maximum of three washers in a row to be housed throughout the interior.

5. The feeding machine for washers according to any of the preceding claims, wherein the linear actuators (7) are electric or pneumatic actuators.

6. The feeding machine for washers according to any of the preceding claims, wherein the ramp (5) comprises a first straight section (52) located in an upper part of the ramp (5), comprising an inclination with respect to the horizontal, and a second curved section (53), located in a lower part of the ramp (5), connected to the first straight section (52), configured to release the washers (3) in a horizontal position.

7. A work station (2) comprising:
- a feeding machine (1) for washers (3), as defined in any of the preceding claims;
- a supply machine (11) for eyelets (4);
- a linear drive machine (12), preferably comprising a hydraulic actuator (13), wherein said linear drive machine (12) is configured to perform the operation of connecting a washer (3) to an eyelet (4) in a laminar body; and
- an electronic management system connected to the linear drive machine (12), to the control electronics of the feeding machine (1) for washers (3) and to the supply machine (11) for eyelets (4).

8. The work station (2) according to the preceding claim, comprising a hopper vibrator (10) connected to a feeding machine (1) for washers (3) by means of a conveyor belt (9).

9. The work station (2) according to claim 7 or 8, comprising a support structure (14) configured to support the feeding machine (1) for washers (3).

10. The work station (2) according to claim 7 to 9, comprising an electronic touch screen (15) connected to the electronic management system of the work station (2).

11. The work station (2) according to any of claims 7 to 10, comprising an activation pedal for activating the linear drive machine (12).
